# FASCICULE DE BREVET EUROPEEN

(11) **EP 3 849 033 B1**
(45) Date de publication et mention de la délivrance du brevet: **10.09.2025**
(21) Numéro de dépôt: 21150519.3
(22) Date de dépôt: 07.01.2021
(51) Int. Cl.: H02B 1/01, H02B 1/30

(54) **ARMOIRE, NOTAMMENT ARMOIRE ÉLECTRIQUE**
SCHRANK, INSBESONDERE ELEKTRISCHER SCHALTSCHRANK
CABINET, IN PARTICULAR AN ELECTRICAL CABINET

(30) Priorité: 08.01.2020 FR 2000133
(43) Date de publication de la demande: 14.07.2021
(73) Titulaire: Schneider Electric Industries SAS, 92500 Rueil-Malmaison (FR)
(72) Inventeur: FERNANDEZ MARTINEZ, Yaiza, 38000 GRENOBLE (FR)
(74) Mandataire: Lavoix

(56) Documents cités:
- EP-A1- 0 901 207
- EP-A1- 1 164 672
- DE-A1- 102012 007 771
- DE-U1- 202018 102 231
- DE-U1- 9 307 113
- US-A- 5 333 950
- US-A1- 2019 372 316
- US-B2- 10 277 014

## Description

La présente invention concerne une armoire, notamment une armoire électrique.

Des armoires sont utilisées dans de nombreuses applications pour accueillir un grand nombre d'objets ou de dispositifs. En particulier, des armoires dites « armoires électriques » sont prévues pour accueillir des dispositifs électriques tels que des batteries, des contacteurs, des disjoncteurs ou encore des appareils de surveillance d'une installation électrique.

Les armoires sont fréquemment obtenues en assemblant un ensemble de panneaux, également appelés « plaques » ou « châssis » sur une ossature, notamment une ossature métallique, comportant un ensemble de profilés reliés les uns aux autres. Les panneaux obturent ainsi les ouvertures délimitées par l'ossature et séparent l'intérieur de l'armoire de l'extérieur, notamment afin d'isoler électriquement de l'extérieur les différents objets ou dispositifs accueillis dans l'armoire, ou d'empêcher une personne non autorisée d'accéder à ces objets ou dispositifs. L'ossature forme, elle, un support pour les panneaux, assurant leur maintien en position et, plus généralement, l'intégrité structurelle de l'armoire. Les panneaux sont dans la plupart des cas vissés sur l'ossature pour assurer une fixation solide, notamment dans des cas où les objets ou dispositifs contenus dans l'armoire sont suspendus aux différents panneaux.

Cependant, la fixation des panneaux sur l'ossature suppose en général la participation de deux opérateurs, l'un d'entre eux maintenant chaque panneau en position pendant que l'autre visse le panneau à l'ossature.

Dans d'autres cas, des systèmes permettant à un unique opérateur de monter l'armoire existent, mais complexifient de manière importante l'armoire puisque des mécanismes complexes sont prévus pour maintenir les panneaux en position pendant leur vissage sur l'ossature.

Il existe donc un besoin pour une armoire, notamment une armoire électrique, qui ne suppose pas la présence de deux opérateurs pour la monter, et qui soit plus simple que les armoires de l'état de la technique.

Les documents EP0901207A1 et US1027701482 décrivent deux armoires électriques dans lesquels un panneau est fixé sur une ossature en étant maintenu en place par un élément de verrouillage qui se déforme élastiquement dans un mouvement de flexion pendant la mise en place du panneau. Les documents DE102012007771A1 et DE9307113U1 montrent deux armoires électriques dans lesquels un panneau est fixé sur une ossature en étant maintenu en place par un élément de verrouillage qui pivote entre les positions de verrouillage et déverrouillage.

A cet effet, il est proposé une armoire, notamment armoire électrique, comportant une ossature et au moins un panneau destiné à être fixé à l'ossature dans une position d'usage, l'ossature comportant une partie supérieure et une partie inférieure, le panneau présentant une extrémité inférieure et une extrémité supérieure délimitant le panneau selon une direction verticale de l'armoire lorsque le panneau est dans la position d'usage, une première direction et une deuxième direction étant définies, la première et la deuxième direction étant perpendiculaires entre elles et perpendiculaires à la direction verticale, le panneau étant perpendiculaire à la première direction lorsque le panneau est dans la position d'usage, l'armoire comportant en outre au moins une ferrure supérieure et une ferrure inférieure, la ferrure supérieure étant fixée à la partie supérieure de l'ossature, la ferrure inférieure étant fixée à la partie inférieure de l'ossature, l'extrémité inférieure du panneau dans la position d'usage reposant sur la ferrure inférieure, la ferrure inférieure étant configurée pour empêcher un déplacement de l'extrémité inférieure selon la première direction par rapport à l'ossature, l'armoire comportant au moins un élément de verrouillage porté par la ferrure supérieure et mobile par rapport à la ferrure supérieure entre une position déverrouillée et une position de verrouillage, l'élément de verrouillage étant configuré pour empêcher un déplacement de l'extrémité supérieure selon la première direction par rapport à l'ossature lorsque l'élément de verrouillage est dans la position de verrouillage et le panneau est dans la position d'usage, et pour permettre un déplacement de l'extrémité supérieure selon la première direction par rapport à l'ossature lorsque l'élément de verrouillage est dans la position déverrouillée.

Selon l'invention, l'élément de verrouillage est mobile en translation par rapport à la ferrure supérieure entre la position de verrouillage et la position déverrouillée et l'élément de verrouillage comporte des moyens de maintien configurés pour coopérer avec des moyens complémentaires de la ferrure supérieure pour maintenir l'élément de verrouillage dans la position de déverrouillage, les moyens de maintien étant notamment des moyens de maintien par encliquetage.

Selon des modes de réalisation avantageux mais non obligatoires, l'armoire présente une ou plusieurs des caractéristiques suivantes, prise(s) isolément ou selon toutes les combinaisons techniquement possibles :
- le panneau est configuré pour être fixé à la ferrure supérieure et à la ferrure inférieure, notamment par vissage, lorsque le panneau est dans la position d'usage.
- la ferrure supérieure comporte une portion arrière contre laquelle le panneau est en appui lorsque le panneau est dans la position d'usage, l'extrémité supérieure étant interposée selon la première direction entre la portion arrière et l'élément de verrouillage lorsque le panneau est dans la position d'usage et l'élément de verrouillage est dans la position de verrouillage.
- au moins une ferrure comporte une première saillie engagée dans une première ouverture correspondante de l'ossature, la première saillie étant configurée pour empêcher une translation de la ferrure selon la direction verticale lorsque la première saillie est engagée dans la première ouverture.
- chaque ferrure supérieure ou inférieure est monobloc.
- la ferrure inférieure comporte une deuxième saillie, la deuxième saillie étant engagée dans une deuxième ouverture du panneau pour empêcher un déplacement de l'extrémité inférieure selon la première direction par rapport à l'ossature lorsque le panneau est dans la position d'usage.

L'armoire comporte en outre un élément de rotation interposé entre la partie inférieure de l'ossature et l'extrémité inférieure, l'élément de rotation étant solidaire de l'extrémité inférieure et comportant une face de roulement configurée pour rouler sur une face de la partie inférieure lorsque le panneau pivote autour d'un axe parallèle à la deuxième direction vers la position d'usage.
- la partie inférieure de l'ossature comporte un guide s'étendant selon la première direction, le guide étant configuré pour que l'élément de rotation roule sur le guide pendant le pivotement du panneau.
- l'élément de rotation comporte, en outre, une face d'appui configurée pour venir en appui contre une face du guide pour empêcher un déplacement de l'élément de rotation selon la deuxième direction lors du pivotement.

Des caractéristiques et avantages de l'invention apparaîtront à la lecture de la description qui va suivre, donnée uniquement à titre d'exemple non limitatif, et faite en référence aux dessins annexés, sur lesquels :
[Fig 1] la figure 1 est une vue en perspective partielle d'un exemple d'armoire selon l'invention, comportant une ossature et au moins un panneau,
[Fig 2] la figure 2 est une vue en perspective partielle du panneau de la figure 1,
[Fig 3] la figure 3 est une vue en perspective partielle agrandie de la zone III de la figure 1, comportant une ferrure inférieure et un élément de rotation,
[Fig 4] la figure est une autre vue en perspective partielle agrandie de l'armoire la figure 1, montrant la ferrure inférieure et l'élément de rotation sous un autre angle,
[Fig 5] la figure 5 est une vue en perspective de la ferrure inférieure,
[Fig 6] la figure 6 est une vue en perspective partielle agrandie de la zone VI de la figure 1, comportant une ferrure supérieure et un élément de verrouillage mobile,
[Fig 7] la figure 6 est une vue en perspective partielle similaire à la figure 6, l'élément de verrouillage étant dans une position différente,
[Fig 8] la figure 8 est une vue en perspective de la ferrure supérieure,
[Fig 9] la figure 9 est une vue agrandie de l'élément de verrouillage de la figure 7, cet élément de verrouillage étant représenté partiellement en coupe, et
[Fig 10] la figure 10 est une vue en perspective de l'élément de rotation de la figure 3.

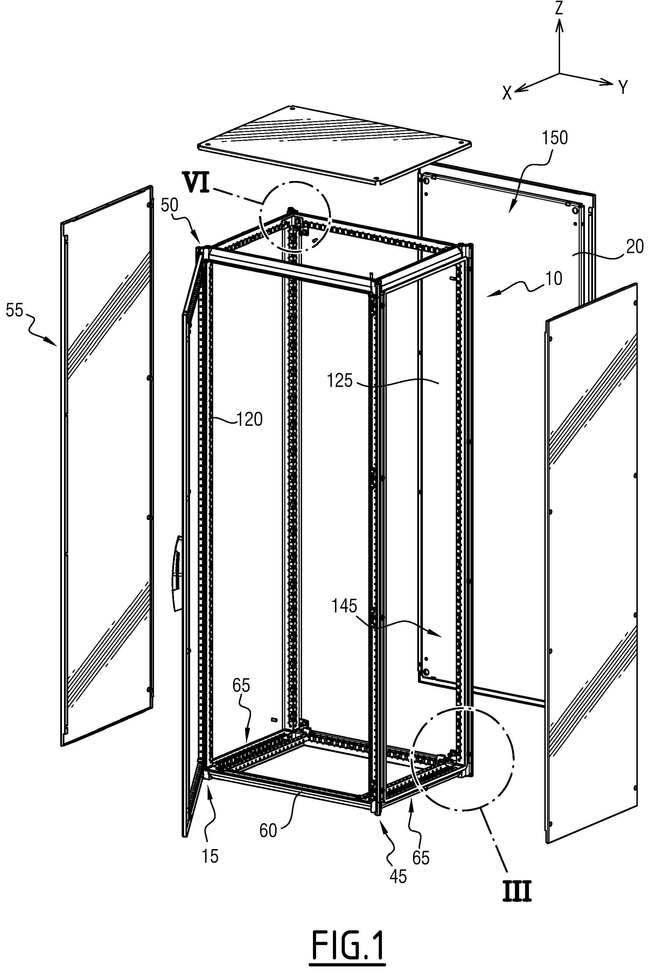

Un exemple d'armoire 10 est représenté partiellement sur la figure 1.

L'armoire 10 comporte une ossature 15, au moins un panneau 20, par exemple une pluralité de panneaux 20, au moins une ferrure inférieure 25, au moins une ferrure supérieure 30, au moins un élément de verrouillage 35 et optionnellement au moins un élément de rotation 40. Sur la figure 1, trois panneaux 20 et une porte 42 sont représentés.

L'armoire 10 est par exemple une armoire électrique destinée à accueillir des dispositifs électriques tels que des interrupteurs, des contacteurs, des disjoncteurs, des batteries, ou encore des dispositifs de surveillance d'un réseau électrique. En particulier, le ou les dispositif(s) électrique(s) est (sont) prévu(s) pour être fixé(s), notamment suspendu(s), à un panneau 20.

Il est défini une première direction X, une deuxième direction Y et une direction verticale Z pour l'armoire 10.

La première direction X est perpendiculaire à la deuxième direction Y et à la direction verticale Z. La deuxième direction Y est perpendiculaire à la direction verticale Z.

La direction verticale Z est une direction verticale lorsque l'armoire 10 est utilisée, notamment lorsque l'armoire 10 est posée sur un sol horizontal. Dans ce cas, les directions X et Y définissent un plan horizontal.

L'ossature 15 est configurée pour supporter chaque panneau 20 lorsque chaque panneau 20 est dans une position d'usage. La position d'usage de chaque panneau 20 est la position dans laquelle le panneau 20 se trouve lorsque l'armoire 10 est complète.

L'ossature 15 est, par exemple, réalisée en un matériau métallique tel que l'acier ou l'aluminium.

L'ossature 15 comporte une partie inférieure 45, une partie supérieure 50 et une partie intermédiaire 55.

La partie inférieure 45 comporte quatre poutres inférieures 60 et, optionnellement, au moins un guide 65, par exemple deux guides 65.

Les poutres inférieures 60 sont fixées les unes aux autres à leurs extrémités, par exemple via des éléments d'angle 70, pour former un cadre rectangulaire, par exemple un cadre carré.

Deux des poutres inférieures 60 s'étendent selon la première direction X et deux des poutres inférieures 60 s'étendent selon la deuxième direction Y.

Chaque poutre inférieure 60 présente une face supérieure 75, cette face supérieure 75 étant par exemple perpendiculaire à la direction verticale Z.

Chaque poutre inférieure 60 présente, en outre, une face interne 80 dirigée vers l'intérieur de l'armoire 10. La face interne 80 est, par exemple, verticale, notamment perpendiculaire à la deuxième direction Y lorsque la poutre inférieure 60 considérée s'étend selon la direction X, ou perpendiculaire à la première direction X lorsque la poutre inférieure 60 considérée s'étend selon la direction Y.

Chaque poutre inférieure 60 est, par exemple un profilé formé par le pliage d'une plaque métallique autour d'un axe parallèle à la direction d'extension X ou Y de la poutre inférieure 60.

Au moins une de la face interne 80 et de la face supérieure 75, par exemple chaque face parmi la face interne 80 et la face supérieure 75, comporte par exemple un ensemble d'orifices 85 et un ensemble de premières ouvertures 90.

Les orifices 85 sont, par exemple, disposés successivement le long d'une ligne parallèle à la direction X ou Y selon laquelle la poutre inférieure 60 considérée s'étend. Une distance, selon la direction X ou Y selon laquelle la poutre inférieure 60 considérée s'étend, entre deux orifice 85 successifs est, par exemple, comprise entre 12,5 millimètres (mm) et 50 mm.

Les premières ouvertures 90 sont, par exemple, disposées successivement le long d'une ligne parallèle à la direction X ou Y selon laquelle la poutre inférieure 60 considérée s'étend. Une distance, selon la direction X ou Y selon laquelle la poutre inférieure 60 considérée s'étend, entre deux premières ouvertures 90 successives est, par exemple, comprise entre 12,5 mm et 50 mm.

Chaque première ouverture 90 est, par exemple, polygonale, notamment rectangulaire, en particulier carrée. Dans ce dernier cas, la longueur de chaque côté de la première ouverture 90 est comprise entre 10 mm et 15 mm.

Chaque élément d'angle 70 de la partie inférieure 45 est, par exemple fixé à deux des poutres inférieures 60, ces deux poutres inférieures 60 s'étendant selon des directions X et Y perpendiculaires l'une à l'autre.

Chaque guide 65 s'étend selon la première direction X. En particulier, chaque guide 65 s'étend entre deux poutres inférieures 60 auxquelles le guide 65 est fixé, ces deux poutres inférieures 60 s'étendant chacune selon la deuxième direction Y.

Chaque guide 65 présente, par exemple, une section rectangulaire ou carrée dans un plan perpendiculaire à la première direction X.

Chaque guide 65 présente une face supérieure 95. La face supérieure 95 est, par exemple, perpendiculaire à la direction verticale Z. En particulier, la face supérieure 95 est de niveau avec la face supérieure 75 de chaque poutre inférieure 60.

Chaque guide 65 présente au moins une face latérale 100, notamment deux faces latérales 100 délimitant le guide 65 selon la deuxième direction Y. Chaque face latérale 100 du guide 65 est, par exemple, perpendiculaire à la deuxième direction Y.

Une longueur de chaque guide 65 est, par exemple, comprise entre 300 mm et 1200 mm.

Chaque guide 65 s'étend notamment selon la direction X entre deux poutres inférieures 60 s'étendant chacune selon la direction Y, et est fixé à ces deux poutres 60.

La partie supérieure 50 comporte quatre poutres supérieures 105.

Les poutres supérieures 105 sont fixées les unes aux autres à leurs extrémités, par exemple via des éléments d'angle 70, pour former un cadre rectangulaire, par exemple un cadre carré.

Deux des poutres supérieures 105 s'étendent selon la première direction X et deux des poutres supérieures 105 s'étendent selon la deuxième direction Y.

Chaque poutre supérieure 105 présente une face inférieure 110, cette face inférieure 110 étant par exemple perpendiculaire à la direction verticale Z.

Chaque poutre supérieure 105 présente, en outre, une face interne 115 dirigée vers l'intérieur de l'armoire 10. La face interne 115 est, par exemple, verticale, notamment perpendiculaire à la deuxième direction Y, notamment perpendiculaire à la deuxième direction Y lorsque la poutre supérieure 105 considérée s'étend selon la direction X, ou perpendiculaire à la première direction X lorsque la poutre supérieure 105 considérée s'étend selon la direction Y.

Chaque poutre supérieure 105 est, par exemple un profilé formé par le pliage d'une plaque métallique autour d'un axe parallèle à la direction d'extension X ou Y de la poutre supérieure 105.

Au moins une de la face interne 115 et de la face inférieure 110, par exemple chaque face parmi la face interne 115 et la face inférieure 110, comporte par exemple un ensemble d'orifices 85 et un ensemble de premières ouvertures 90, ces orifices et ouvertures étant par exemple identiques aux orifices et ouvertures 85, 90 des poutres inférieures 60.

Chaque élément d'angle 70 de la partie supérieure 50 est, par exemple fixé à deux des poutres supérieures 105, ces deux poutres supérieures 105 s'étendant selon des directions X et Y perpendiculaires l'une à l'autre.

La partie intermédiaire 55 est interposée entre la partie inférieure 45 et la partie supérieure 50. En particulier, la partie intermédiaire 45 est supportée par la partie inférieure 45 et supporte la partie supérieure 50.

La partie intermédiaire 55 comporte, par exemple, un ensemble de piliers 120, notamment quatre piliers 120.

Chaque pilier 120 s'étend selon la direction verticale Z entre la partie inférieure 45 et la partie supérieure 50. Par exemple, chaque pilier 120 est fixé à une de ses extrémités à un élément d'angle 70 de la partie supérieure 50 et à un élément d'angle 70 de la partie inférieure 45.

Il est à noter que les panneaux 20 sont fréquemment dénommés « châssis », notamment lorsque l'armoire 10 est prévue pour que des dispositifs soient suspendus aux panneaux 20. Les termes « panneau », « châssis » et « plaque » sont alors généralement considérés comme interchangeables.

Chaque panneau 20 est réalisé en un matériau métallique, par exemple en acier galvanisé.

Chaque panneau 20 est, par exemple, monobloc.

Chaque panneau 20 est, par exemple, rectangulaire, ou encore carré.

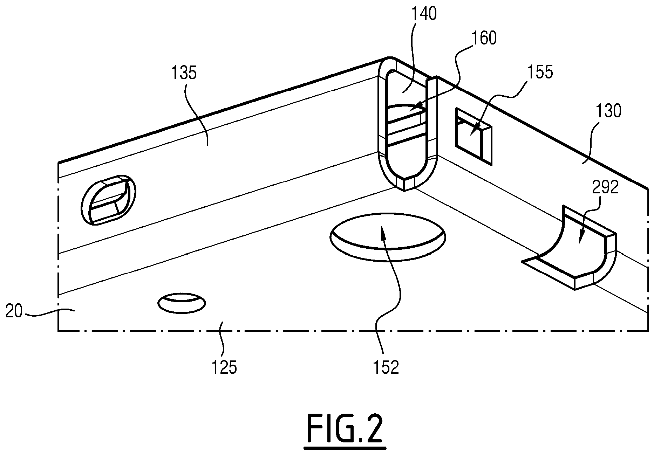

Chaque panneau 20 comporte, par exemple, une portion principale 125, deux portions d'extrémité 130, deux portions latérales 135 et deux portions arrière 140, visibles sur la figure 2.

Chaque panneau 20 présente une extrémité supérieure 145 et une extrémité inférieure 150.

Lorsque le panneau 20 est dans sa position d'usage, le panneau 20 est accueilli dans un cadre formé par une poutre inférieure 60 s'étendant selon la deuxième direction Y, par une poutre supérieure 105 s'étendant selon la deuxième direction Y et par deux piliers 120 reliant deux à deux les extrémités de la poutre inférieure 60 et de la poutre supérieure 105.

La portion principale 125, les portions d'extrémité 130, les portions latérales 135 et les portions arrière 140 sont par exemple venues de matière entre elles. En particulier, la portion principale 125, les portions d'extrémité 130, les portions latérales 135 et les portions arrière 140 sont formées par pliage d'une unique feuille du matériau constituant le panneau 20.

Lorsque le panneau 20 est dans sa position d'usage, la portion principale 125 sépare l'intérieur de l'armoire 10 de l'extérieur de l'armoire 10. En particulier, la portion principale 125 est configurée pour obturer le cadre dans lequel le panneau 20 est accueilli.

Une hauteur de la portion principale 125, mesurée selon la direction verticale Z lorsque le panneau 20 est dans la position d'usage, est par exemple comprise entre 1000 mm et 2200 mm.

Une largeur de la portion principale 125, mesurée selon la deuxième direction Y lorsque le panneau 20 est dans la position d'usage, est par exemple comprise entre 300 mm et 1600 mm.

Chaque portion principale 125 comporte, par exemple, au moins un trou 152 traversant la portion principale 125 selon la direction principale X, par exemple quatre trous 152.

Chaque trou 152 présente, par exemple, un diamètre compris entre 20 mm et 25 mm.

Chaque portion d'extrémité 130 est disposée à une extrémité 145, 150 du panneau 20.

Chaque portion d'extrémité 130 s'étend, à partir de l'extrémité 145, 150 correspondante de la portion principale 125, selon la première direction X. Chaque portion d'extrémité 130 est, par exemple, perpendiculaire à la direction verticale Z.

La portion principale 125 est intercalée selon la direction verticale Z entre les deux portions d'extrémité 130.

Chaque portion d'extrémité 130 est, par exemple, rectangulaire.

Une longueur de chaque portion d'extrémité 130, mesurée selon la première direction X, est par exemple comprise entre 20 mm et 25 mm.

Une largeur de chaque portion d'extrémité 130, mesurée selon la deuxième direction Y lorsque le panneau 20 est dans la position d'usage, est par exemple comprise entre 250 mm et 1550 mm. En particulier, la largeur de la portion d'extrémité 130 est égale à la largeur de la portion principale 125.

Chaque portion d'extrémité 130 comporte, par exemple, au moins une deuxième ouverture 155, notamment deux deuxièmes ouvertures 155.

Chaque deuxième ouverture 155 est, par exemple, carrée ou rectangulaire, la longueur des côtés étant par exemple comprise entre 10 mm et 25 mm. Selon un mode de réalisation deux des côtés de la deuxième ouverture 155 mesurent 10 mm, et les deux autres côtés mesurent entre 15 mm et 25 mm.

Chaque portion latérale 135 s'étend le long de la portion principale 125 selon la direction verticale Z. Par exemple, une longueur de chaque portion latérale 135, mesurée selon la direction verticale Z, est comprise entre 950 mm et 2150 mm. En particulier, la longueur de la portion latérale 135 est égale à la hauteur de la portion principale 125.

Chaque portion latérale 135 s'étend à partir de la portion principale 125 selon la première direction X. Chaque portion latérale 135 est notamment perpendiculaire à la portion principale 125.

La portion principale 125 est intercalée selon la deuxième direction Y entre les deux portions latérales 135.

Chaque portion latérale 135 est, par exemple, rectangulaire.

Une largeur de chaque portion latérale 135, mesurée selon la première direction X, est par exemple comprise entre 20 mm et 30 mm.

Chaque portion arrière 140 est perpendiculaire à la direction principale X.

Chaque portion arrière 140 s'étend dans un plan perpendiculaire à la direction principale X à partir d'une portion latérale 135 correspondante. En particulier, la portion latérale 135 est intercalée selon la première direction X entre la portion arrière 140 correspondante et la portion principale 125.

Chaque portion arrière 140 est, notamment, traversée par un trou 160 disposé en regard de chaque trou 152 de la portion principale 125.

Les ferrures inférieures 25 sont, par exemple, au nombre de deux pour chaque panneau 20 de l'armoire 10.

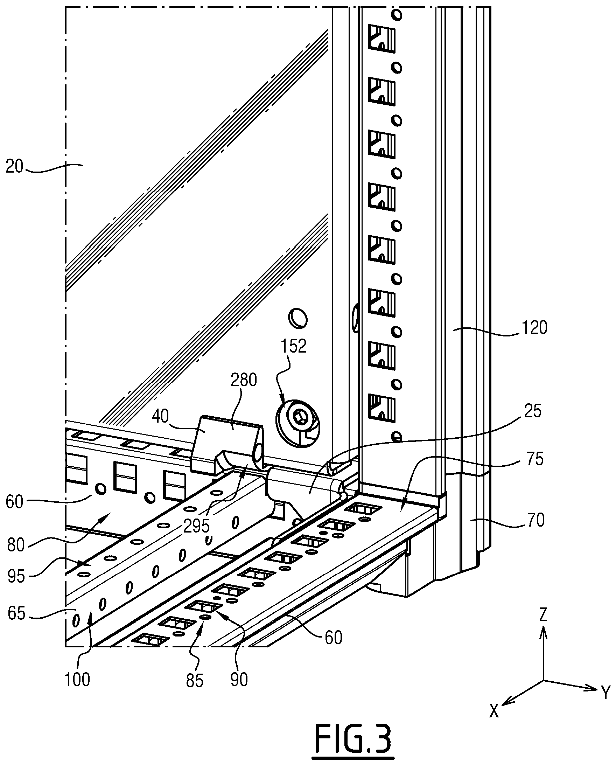

Chaque ferrure inférieure 25 est fixée à la partie inférieure 45 de l'ossature 15, comme visible sur la figure 3. Par exemple, chaque ferrure inférieure 25 est disposée dans un angle de l'ossature 15. En particulier, chaque ferrure inférieure 25 est en contact avec deux poutres inférieures 60 formant un angle droit l'une avec l'autre.

Parmi ces deux poutres inférieures 60, la poutre inférieure 60 s'étendant selon la deuxième direction Y est dénommée « première poutre inférieure 60 », la poutre inférieure 60 s'étendant selon la première direction X est dénommée « deuxième poutre inférieure 60 ».

La première poutre inférieure 60 est disposée immédiatement en-dessous du panneau 20 lorsque le panneau 20 est dans sa position d'usage. En particulier, la première poutre inférieure 60 et le panneau 20 sont superposés lorsque le panneau 20 est dans sa position d'usage. Notamment, une projection du panneau 20 et une projection de la première poutre inférieure 60 sur un même plan horizontal sont au moins partiellement confondues, i.e ne sont pas disjointes.

Une ferrure inférieure 25 est notamment disposée à chaque extrémité de la première poutre inférieure 60. Chaque ferrure inférieure 25 est alors, par exemple, symétrique par rapport à un plan vertical parallèle à la première direction X de l'autre ferrure inférieure 25 disposée à l'autre extrémité. Ces deux ferrures inférieures 25 sont notamment images miroir l'une de l'autre.

Chaque ferrure inférieure 25 est configurée pour supporter le panneau 20, notamment pour supporter l'extrémité inférieure 145 du panneau 20 correspondant lorsque le panneau 20 est dans sa position d'usage. En d'autres termes, l'extrémité inférieure 145 du panneau 20 repose sur la ferrure inférieure 25 lorsque le panneau 20 est dans sa position d'usage.

En particulier, lorsque le panneau 20 est dans sa position d'usage, l'extrémité inférieure 145 est en appui contre chaque ferrure inférieure 25 correspondante. Notamment, l'une des portions d'extrémité 130 est en appui contre la ferrure inférieure 25.

Chaque ferrure inférieure 25 est, par exemple, réalisée en un matériau métallique tel que l'acier.

Chaque ferrure inférieure 25 est, par exemple, monobloc. En particulier, chaque ferrure inférieure 25 est obtenue par pliage et découpe d'une unique plaque. Une épaisseur de la plaque à partir de laquelle la ferrure inférieure 25 est formée est, par exemple, comprise entre 2 mm et 4 mm.

Chaque ferrure inférieure 25 est configurée pour empêcher un mouvement de la partie inférieure 145 du panneau 20 correspondant selon la première direction X par rapport à la ferrure inférieure 25 lorsque le panneau 20 est dans sa position d'usage.

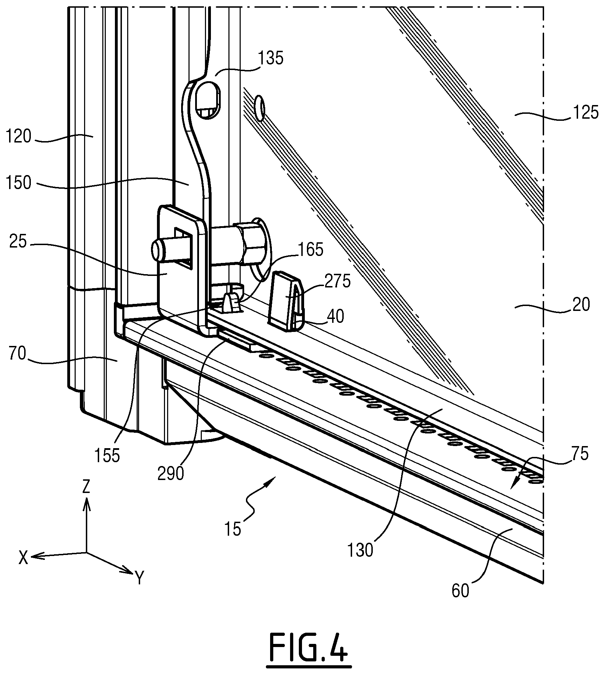

Par exemple, la ferrure inférieure 25 comporte une première saillie 165 s'étendant selon la direction verticale Z, visible sur la figure 4, et destinée à être engagée dans une ouverture 155 du panneau 20 lorsque le panneau 20 est dans sa position d'usage.

En variante l'extrémité inférieure 145 est intercalée selon la première direction X entre deux portions de la ferrure inférieure 25.

La première saillie 165 présente une hauteur, mesurée selon la direction verticale Z, comprise par exemple entre 8 mm et 11 mm.

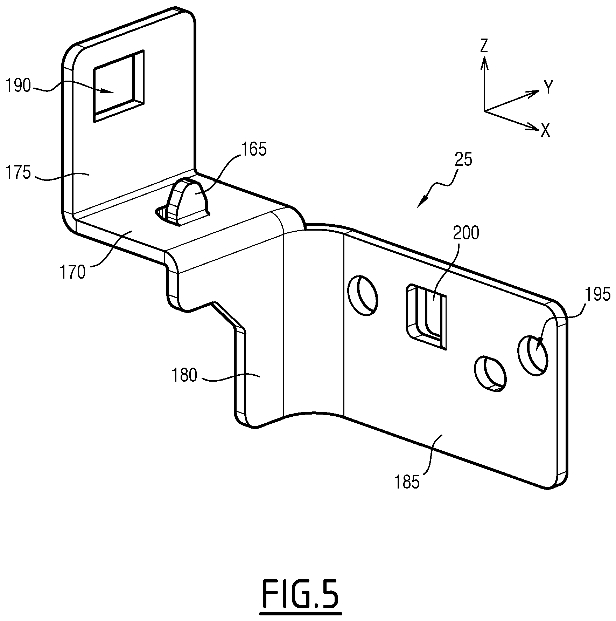

Une ferrure inférieure 25 est représentée seule sur la figure 5. Chaque ferrure inférieure 25 comporte, par exemple, une première portion d'appui 170, une première portion arrière 175, une première portion intermédiaire 180 et une première portion de fixation 185.

La première portion d'appui 170 est interposée entre l'extrémité inférieure 145 et la première poutre inférieure 60.

La première portion d'appui 170 est, par exemple, perpendiculaire à la direction verticale Z.

La première portion d'appui 170 est, par exemple, rectangulaire. La première portion d'appui 170 présente une longueur, mesurée selon la première direction X, comprise entre 20 mm et 35 mm. La première portion d'appui 170 présente une largeur, mesurée selon la deuxième direction Y, comprise entre 25 mm et 50 mm.

La première saillie 165 s'étend en direction de la partie supérieure 50 de l'ossature 15 à partir de la première portion d'appui 170. La première saillie 165 est, par exemple, formée par découpe et pliage d'une partie de la première portion d'appui 170.

La première portion arrière 175 s'étend selon la direction verticale Z à partir de la première portion d'appui 170.

La première portion arrière 175 est en appui contre une portion arrière 140 correspondante du panneau 20.

La première portion arrière 175 comporte un trou 190 traversant la première portion arrière 175 selon la direction principale X. Le trou 190 est disposé en regard du trou 152. En outre, le trou 190 est disposé en regard du trou 160 de la portion arrière 140 qui est en appui contre la première portion arrière 175.

Notamment, les trous 160, 152 et 190 sont alignés les uns avec les autres le long de la première direction X.

Les trous 160, 152 et 190 sont configurés pour permettre à une vis d'être introduite à travers le trou 152 depuis l'intérieur de l'armoire 10 pour fixer la portion arrière 140 du panneau 20 à la première portion arrière 175. Lorsque la portion arrière 140 du panneau 20 est fixée à la première portion arrière 175, la vis traverse conjointement la portion arrière 140 du panneau 20 et la première portion arrière 175. Par exemple, la tête de la vis est en appui contre la portion arrière 140 du panneau 20 et est vissée à un écrou en appui contre la première portion arrière 175 de la ferrure 25.

Le trou 190 est, par exemple, rectangulaire. Selon un mode de réalisation deux des côtés du trou 190 mesurent 15 mm, et les deux autres côtés mesurent 12 mm.

La première portion intermédiaire 180 s'étend à partir de la première portion d'appui 175 selon la direction verticale Z. En particulier, la première portion intermédiaire 180 s'étend à partir de la première portion d'appui 175 dans un sens opposé à la première portion arrière 175, donc à l'opposé de la partie inférieure 45 de l'ossature. En d'autres termes, la première portion intermédiaire 180 s'étend à partir de la première portion d'appui 175 vers le bas selon la direction verticale Z.

La première portion d'appui 170 est intercalée selon la première direction X entre la première portion intermédiaire 180 et la première portion arrière 175.

La première portion intermédiaire 180 est, par exemple, en appui contre la face interne 80 de la première poutre inférieure 60.

La première portion de fixation 185 s'étend selon la première direction X à partir de la première portion intermédiaire 180.

La première portion de fixation 185 est, par exemple, rectangulaire. La première portion de fixation 185 présente une longueur, mesurée selon la première direction X, comprise entre 50 mm et 70 mm. La première portion de fixation 185 présente une hauteur, mesurée selon la direction verticale Z, comprise entre 35 mm et 45 mm.

La première portion de fixation 185 est en appui contre la deuxième poutre inférieure 60, notamment contre la face interne 80 de la deuxième poutre inférieure 60.

La première portion de fixation 185 comporte, par exemple, au moins un trou 195, par exemple une pluralité de trous 195, et une deuxième saillie 200.

Chaque trou 195 est configuré pour coopérer avec un orifice 85 de la face interne 80 de la deuxième poutre inférieure 60 pour permettre la fixation de la ferrure inférieure 25 à la partie inférieure 45 de l'ossature 15. En particulier, chaque trou 195 est configuré pour permettre à une vis de traverser conjointement le trou 195 et l'orifice 85 correspondant pour fixer la ferrure inférieure 25 à la deuxième poutre inférieure 60.

Les trous 195 de la première portion de fixation 185 sont, par exemple, au nombre de trois, toutefois ce nombre est susceptible de varier.

La deuxième saillie 200 est engagée dans une première ouverture 90 de la face interne 80 de la deuxième poutre inférieure 60.

La deuxième saillie 200 est configurée pour empêcher une translation de la ferrure inférieure 25 par rapport à l'ossature 15 selon la direction verticale Z lorsque la deuxième saillie 200 est engagée dans la première ouverture 90 correspondante.

La deuxième saillie 200 est par exemple venue de matière avec la première portion de fixation 185, étant notamment réalisée par découpe et pliage d'une partie de la première portion de fixation 185.

La deuxième saillie 200 est, par exemple, un crochet destiné à enserrer une partie de la deuxième poutre inférieure 60 entre la saillie 200 et la première portion de fixation 185.

Les ferrures supérieures 30 sont, par exemple, au nombre de deux pour chaque panneau 20 de l'armoire 10.

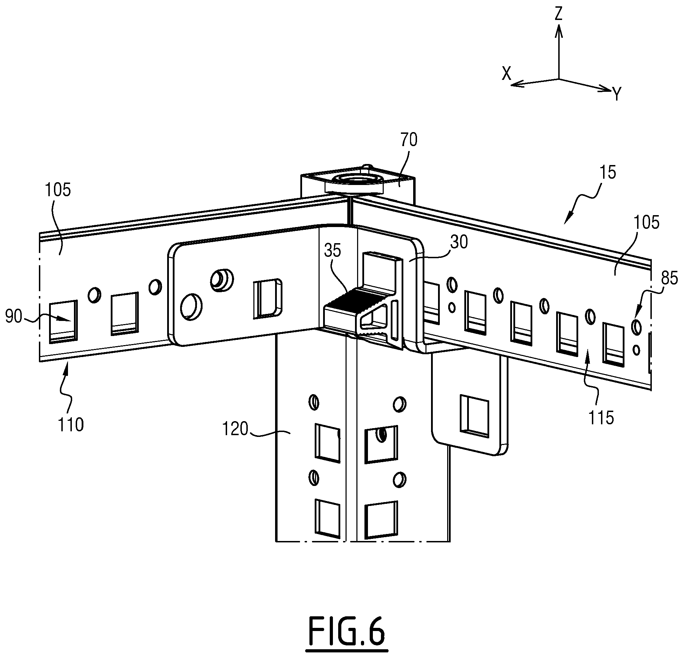

Chaque ferrure supérieure 30 est fixée à la supérieure 50 de l'ossature 15, comme visible sur la figure 6. Par exemple, chaque ferrure supérieure 30 est disposée dans un angle de l'ossature 15. En particulier, chaque ferrure supérieure 30 supérieures est en contact avec deux poutres supérieures 105 formant un angle droit l'une avec l'autre.

Parmi ces deux poutres supérieures 105, la poutre supérieure 105 s'étendant selon la deuxième direction Y est dénommée « première poutre supérieure 105», la poutre supérieure 105 s'étendant selon la première direction X est dénommée « deuxième poutre supérieure 105 ».

La première poutre supérieure 105 est disposée immédiatement au-dessus du panneau 20 lorsque le panneau 20 est dans sa position d'usage. En particulier, la première poutre supérieure 105 et le panneau 20 sont superposés lorsque le panneau 20 est dans sa position d'usage. Notamment, une projection du panneau 20 et une projection de la première poutre supérieure 105 sur un même plan horizontal sont au moins partiellement confondues, i.e ne sont pas disjointes.

En d'autres termes, le panneau 20 est interposé selon la direction verticale Z entre la première poutre supérieure 105 et la première poutre inférieure 60.

Une ferrure supérieure 30 est notamment disposée à chaque extrémité de la première poutre supérieure 105. Chaque ferrure supérieure 30 est alors, par exemple, symétrique par rapport à un plan vertical parallèle à la première direction X de la ferrure supérieure 30 disposée à l'autre extrémité. Ces deux ferrures supérieures 30 sont notamment images miroir l'une de l'autre.

Il est à noter que les ferrures supérieures 30 sont susceptibles d'être montés en tout point de la première poutre supérieure 105.

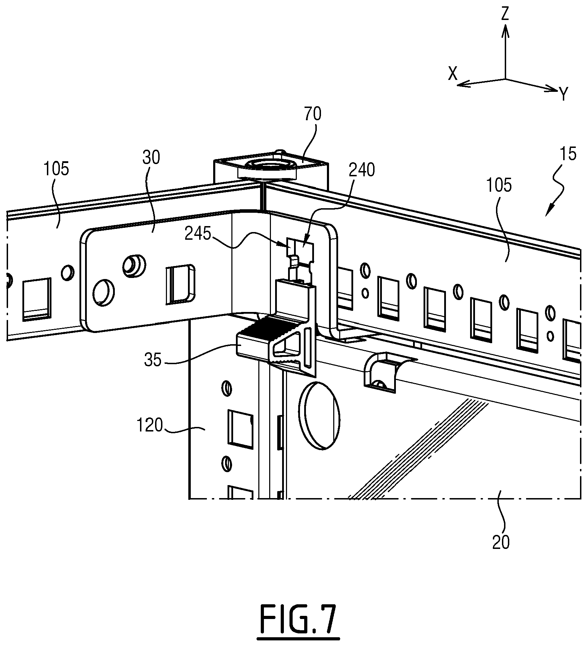

Chaque ferrure supérieure 30 est configurée pour supporter un élément de verrouillage 35 correspondant. En particulier, chaque ferrure supérieure 30 est configurée pour permettre un déplacement de l'élément de verrouillage 35 correspondant entre une position déverrouillée visible sur la figure 6 et une position de verrouillage visible sur la figure 7.

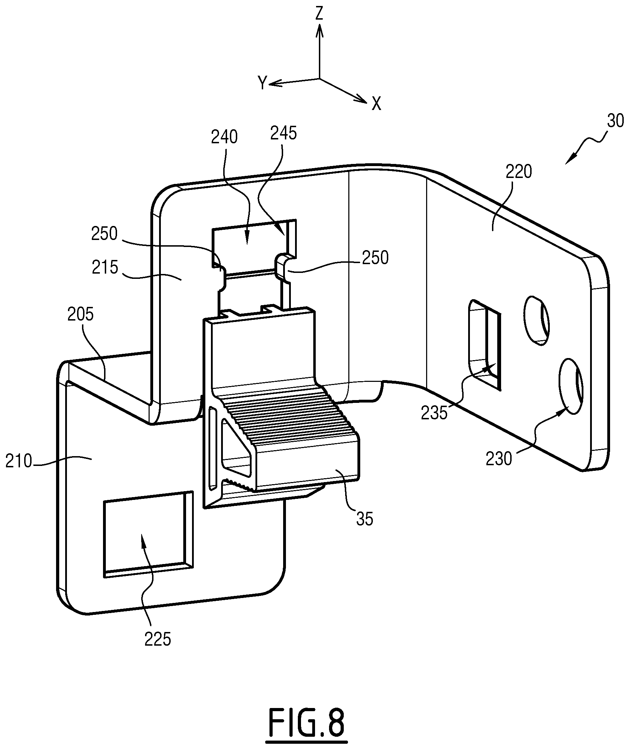

La ferrure supérieure 30, avec l'élément de verrouillage 35 correspondant dans sa position de verrouillage, sont représentés seuls sur la figure 8. Il est à noter que la ferrure supérieure 30 représentée sur la figure 8 est image miroir de la ferrure supérieure 30 représentée sur les figures 6 et 7, toutefois ces deux ferrures supérieures 30 sont, excepté leur relation de symétrie, identiques l'une à l'autre.

La ferrure supérieure 30 comprend une portion 205 horizontale, une deuxième portion arrière 210, une deuxième portion intermédiaire 215 et une deuxième portion de fixation 220.

La portion horizontale 205 est interposée entre l'extrémité supérieure 150 du panneau 20 et la première poutre supérieure 105.

La portion horizontale 205 est, par exemple, perpendiculaire à la direction verticale Z.

La portion horizontale 205 est, par exemple, rectangulaire. La portion horizontale 205 présente une longueur, mesurée selon la première direction X, comprise entre 20 mm et 35 mm. La deuxième portion d'appui 205 présente une largeur, mesurée selon la deuxième direction Y, comprise entre 25 mm et 50 mm.

La deuxième portion arrière 210 s'étend selon la direction verticale Z à partir de la portion horizontale 205.

La deuxième portion arrière 210 est en appui contre une portion arrière 140 correspondante du panneau 20.

La deuxième portion arrière 210 comporte un trou 225 traversant la deuxième portion arrière 210 selon la direction principale X. Le trou 225 est disposé en regard d'un trou 152 du panneau 20. En outre, le trou 225 est disposé en regard d'un trou 160 de la portion arrière 140 qui est en appui contre la deuxième portion arrière 210. Notamment, les trous 160, 152 et 225 considérés sont alignés les uns avec les autres le long de la première direction X.

Les trous 160, 152 et 225 sont configurés pour permettre à une vis d'être introduite à travers le trou 152 depuis l'intérieur de l'armoire 10 pour fixer la portion arrière 140 du panneau 20 à la deuxième portion arrière 210. Lorsque la portion arrière 140 du panneau 20 est fixée à la deuxième portion arrière 210, la vis traverse conjointement la portion arrière 140 du panneau 20 et la deuxième portion arrière 210.

Le trou 225 est, par exemple, rectangulaire. Selon un mode de réalisation deux des côtés du trou 225 mesurent 15 mm, et les deux autres côtés mesurent 12 mm.

La deuxième portion intermédiaire 215 s'étend à partir de la portion horizontale 205 selon la direction verticale Z. En particulier, la deuxième portion intermédiaire 215 s'étend à partir de la portion horizontale 205 dans un sens opposé à la deuxième portion arrière 210, donc à l'opposé de la partie inférieure 45 de l'ossature. En d'autres termes, deuxième portion intermédiaire 215 s'étend à partir de la portion horizontale vers le haut selon la direction verticale Z.

La portion horizontale 205 est intercalée selon la première direction X entre la deuxième portion intermédiaire 215 et la deuxième portion arrière 210.

Une distance, selon la première direction X, entre la deuxième portion intermédiaire 215 et la face interne 80 de la première poutre inférieure 105 est, par exemple, comprise entre 0 mm et 4 mm.

La deuxième portion intermédiaire 215 est configurée pour accueillir l'élément de verrouillage 35. La deuxième portion intermédiaire 215 est, par exemple, configurée pour guider l'élément de verrouillage 35 lors du mouvement de l'élément de verrouillage 35 entre sa position de verrouillage et sa position déverrouillée.

La deuxième portion intermédiaire 215 comporte, par exemple, une fente 240 s'étendant selon la direction verticale Z et traversant la deuxième portion intermédiaire 215 selon la première direction X.

Une longueur, mesurée selon la direction verticale Z, de la fente 240 est comprise, par exemple, entre 29 mm et 32 mm. Une largeur, mesurée selon la deuxième direction Y, de la fente 240 est comprise, par exemple, entre 10 mm et 16 mm.

La fente 240 est configurée pour guider l'élément de verrouillage 35 en translation selon la direction verticale Z.

La fente 240 est délimitée selon la deuxième direction Y par deux faces extrêmes 245.

Au moins une face extrême 245, par exemple chaque face extrême, comporte au moins une quatrième saillie 250, par exemple deux quatrièmes saillies 250.

Chaque quatrième saillie 250 présente une longueur, mesurée selon la deuxième direction Y, comprise par exemple, entre 1 mm et 5 mm.

Chaque quatrième saillie 250 est configurée pour coopérer avec l'élément de verrouillage 35 pour maintenir l'élément de verrouillage 35 dans la position de verrouillage ou dans la position déverrouillée, comme il apparaîtra ci-après.

La deuxième portion de fixation 220 s'étend selon la première direction X à partir de la deuxième portion intermédiaire 215.

La deuxième portion de fixation 220 est, par exemple, rectangulaire. La deuxième portion de fixation 220 présente une longueur, mesurée selon la première direction X, comprise entre 50 mm et 70 mm. La deuxième portion de fixation 220 présente une hauteur, mesurée selon la direction verticale Z, comprise entre 35 mm et 45 mm.

La deuxième portion de fixation 220 est en appui contre la deuxième poutre supérieure 105, notamment contre la face interne 115 de la deuxième poutre supérieure 105.

La deuxième portion de fixation 220 comporte, par exemple, au moins un trou 230, par exemple une pluralité de trous 230, et une troisième saillie 235.

Chaque trou 230 est configuré pour coopérer avec un orifice 85 de la face interne 115 de la deuxième poutre supérieure 105 pour permettre la fixation de la ferrure supérieure 30 à la partie supérieure 50 de l'ossature 15. En particulier, chaque trou 230 est configuré pour permettre à une vis de traverser conjointement le trou 230 et l'orifice 85 correspondant pour fixer la ferrure supérieure 30 à la deuxième poutre supérieure 105.

La troisième saillie 235 est engagée dans une première ouverture 90 de la face interne 115 de la deuxième poutre supérieure 105.

La troisième saillie 235 est configurée pour empêcher une translation de la ferrure supérieure 30 par rapport à l'ossature 15 selon la direction verticale Z lorsque la troisième saillie 235 est engagée dans la première ouverture 90 correspondante.

La troisième saillie 235 est par exemple venue de matière avec la deuxième portion de fixation 220, étant notamment réalisée par découpe et pliage d'une partie de la deuxième portion de fixation 220.

La troisième saillie 235 est, par exemple, un crochet destiné à enserrer une partie de la deuxième poutre supérieure 105 entre la saillie 235 et la deuxième portion de fixation 220.

Chaque élément de verrouillage 35 est mobile par rapport à la ferrure supérieure 30 correspondante entre la position de verrouillage et la position déverrouillée correspondantes. Selon l'invention, chaque élément de verrouillage 35 est mobile en translation, notamment selon la direction verticale Z, entre la position de verrouillage et la position déverrouillée.

Chaque élément de verrouillage 35 est configuré pour, lorsque l'élément de verrouillage 35 est dans la position de verrouillage, empêcher un déplacement de l'extrémité supérieure 150 du panneau selon la première direction X par rapport à l'ossature 15.

En particulier, lorsque l'élément de verrouillage 35 est dans la position de verrouillage, l'extrémité supérieure 150 est interposée entre l'élément de verrouillage 35 et la deuxième portion arrière 210. Par exemple, lorsque l'élément de verrouillage 35 est dans la position de verrouillage, l'élément de verrouillage 35 fait saillie à partir de la portion horizontale 205, selon la direction verticale Z, sur une distance comprise entre 10 mm et 20 mm.

Une distance entre la position de verrouillage et la position déverrouillée est, par exemple, comprise entre 8 mm et 20 mm.

Lorsque l'élément de verrouillage 35 est dans la position déverrouillée, l'élément de verrouillage 35 permet un mouvement de l'extrémité supérieure 150 du panneau selon la première direction X par rapport à l'ossature 15.

Par exemple, lorsque l'élément de verrouillage 35 est dans la position déverrouillée, l'élément de verrouillage 35 ne fait pas saillie selon la direction verticale Z par rapport à la portion horizontale 205. Ainsi, lorsque l'élément de verrouillage 35 est dans la position déverrouillée, l'extrémité supérieure 150 n'est pas interposée entre l'élément de verrouillage 35 et la deuxième portion arrière 210.

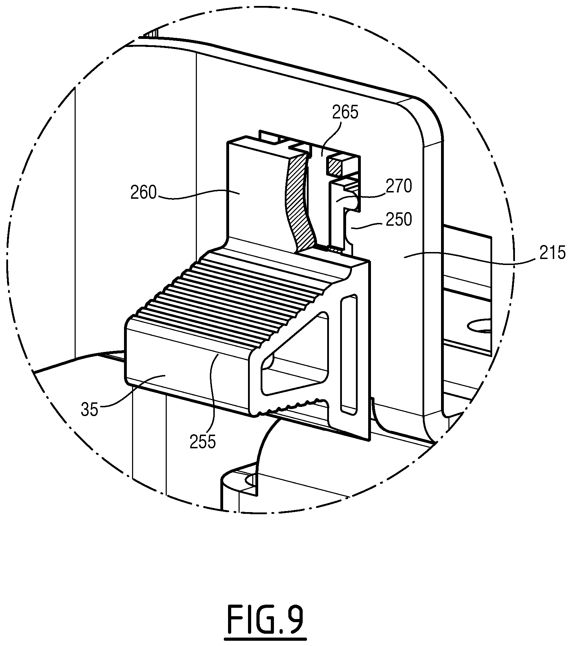

L'élément de verrouillage 35 est représenté en détails sur la figure 9.

L'élément de verrouillage 35 comporte, par exemple, une portion de préhension 255, une première portion de guidage 260, une deuxième portion de guidage 265 et des moyens 270 de maintien de l'élément de verrouillage 35.

L'élément de verrouillage 35 est, par exemple, monobloc. En d'autres termes, la portion de préhension 255, la première portion de guidage 260, la deuxième portion de guidage 265 et les moyens 270 de maintien de l'élément de verrouillage 35 sont venus de matière es uns avec les autres.

L'élément de verrouillage 35 est réalisé en une matière plastique, par exemple en polyamide, notamment en polyamide chargé en polypropylène.

La portion de préhension 255 est configurée pour permettre à un opérateur de déplacer l'élément de verrouillage 35 entre la position de verrouillage et la position déverrouillée correspondantes.

La portion de préhension 255 fait saillie selon la première direction X à partir de la première portion de guidage 260.

La première portion de guidage 260 est configurée pour venir en appui contre la deuxième portion intermédiaire 215, notamment contre la face de la deuxième portion intermédiaire 215 qui est dirigée vers l'intérieur de l'armoire 10, donc à l'opposé de la première poutre supérieure 105.

Par exemple, la première portion de guidage 260 présente une face plane en appui contre la deuxième portion intermédiaire 215.

La deuxième portion de guidage 265 est configurée pour venir en appui contre la deuxième portion intermédiaire 215, notamment contre la face de la deuxième portion intermédiaire 215 qui est dirigée vers l'extérieur de l'armoire 10, donc vers la première poutre supérieure 105.

Par exemple, la deuxième portion de guidage 265 présente une face plane en appui contre la deuxième portion intermédiaire 215.

En particulier, la deuxième portion intermédiaire 215 est interposée entre les deux portions de guidage 260, 265.

Chaque portion de guidage 260, 265 présente par exemple, selon la deuxième direction Y, une largeur strictement supérieure à la largeur de la fente 240. Ainsi, les portions de guidage 260, 265 s'opposent à un mouvement de l'élément de verrouillage 35 selon la première direction X par rapport à la ferrure supérieure 30.

Les portions de guidage 260, 265 sont, par exemple, reliées et solidarisées l'une à l'autre par des portions de l'élément de verrouillage 35 s'étendant selon la première direction X à travers la fente 240.

Les moyens de maintien 270 sont configurés pour coopérer avec la ferrure supérieure 30 pour maintenir l'élément de verrouillage 35 dans sa position de verrouillage et/ou dans sa position déverrouillée.

Les moyens de maintien 270 sont, par exemple, accueillis dans la fente 240.

Les moyens de maintien 270 sont, par exemple, des moyens élastiques configurés pour engager chaque quatrième saillie 250 de la fente 240 de manière à maintenir l'élément de verrouillage 35 dans sa position de verrouillage et/ou dans sa position déverrouillée.

Par exemple, les moyens de maintien 270 comportent au moins un bras 270 (visible par transparence sur la figure 9 à travers la première portion de guidage 260 partiellement cachée) configuré pour venir en appui contre une quatrième saillie 250 lorsque l'élément de verrouillage 35 est dans sa position déverrouillée et pour exercer sur cette quatrième saillie 250 une force s'opposant à un mouvement de l'élément de verrouillage 35 vers sa position de verrouillage.

Le bras 270 est configuré pour être déformé élastiquement sous l'effet d'une force d'appui de la saillie 250 sur le bras 270 lorsqu'un opérateur déplace l'élément de verrouillage 35 vers sa position de verrouillage, de manière à permettre un tel mouvement.

Lorsque l'élément de verrouillage 35 est dans sa position de verrouillage, le bras 270 reprend sa position non déformée et est en appui contre une autre saillie (non représentée) de la fente 240 pour empêcher un mouvement de l'élément de verrouillage 35 hors de la fente 240 selon la direction verticale Z sous l'effet de son propre poids.

Le bras 270 forme alors avec les saillies 250 des moyens de maintien par encliquetage.

Les bras 270 sont par exemple au nombre de deux, un pour chaque face extrême 245 de la fente 240.

Il est à noter que d'autres types de moyens de maintien 270 coopérant avec des moyens complémentaires 250 correspondants de la ferrure supérieure 30 sont également envisageables.

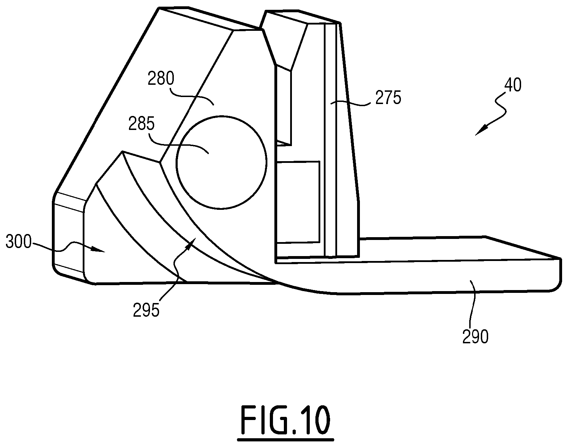

Un élément de rotation 40 est représenté sur la figure 10, et visible sur les figures 3 et 4. Toutefois, il est à noter que plusieurs éléments de rotation 40 sont susceptibles d'être présents, par exemple deux par panneau 20.

Chaque élément de rotation 40 est interposé entre l'extrémité inférieure 145 du panneau 20 et la partie inférieure 45 de l'ossature 15 selon la direction verticale Z. En particulier, l'élément de rotation 40 est interposé entre l'extrémité inférieure 145 du panneau 20 et la première poutre inférieure 60 selon la direction verticale Z.

Chaque élément de rotation 40 est, par exemple, fixé à l'extrémité inférieure 145, notamment par pincement de la portion principale 125 entre deux protrusions 275 et 280 de l'élément de rotation 40.

Chaque élément de rotation 40 est configuré pour permettre une rotation du panneau 20 par rapport à l'ossature 15 lors de la mise en place du panneau 20, donc avant que le panneau 20 soit dans sa position d'usage. La rotation est notamment une rotation autour d'un axe parallèle à la deuxième direction Y.

Chaque élément de rotation 40 est réalisé en une matière plastique, par exemple en polyamide, notamment en polyamide chargé en polypropylène.

Chaque élément de rotation 40 comporte, outre les protrusions 275 et 280, un corps 285 et une languette 290.

Chaque protrusion 275, 280 s'étend selon la direction verticale Z, vers le haut, à partir du corps 285.

La protrusion 275 est en appui contre la face de la portion principale 125 qui est dirigée vers l'extérieur de l'armoire 10. Par exemple, la protrusion 275 est engagée dans une ouverture 292 ménagée dans la portion principale 125 et/ou dans la portion d'extrémité 130 qui délimite la portion principale 125 par le bas lorsque le panneau 20 est dans la position d'usage.

La protrusion 280 est en appui contre la face de la portion principale 125 qui est dirigée vers l'intérieur de l'armoire 10.

Le corps 285 présente une face de roulement 295 et une face d'appui 300.

La face de roulement 295 est configurée pour rouler sur une face de la partie inférieure 45 de l'ossature 15 pendant la rotation du panneau selon un axe s'étendant selon la deuxième direction Y.

En d'autres termes, lors de la rotation précitée, la face de roulement 295 est en appui contre la partie inférieure 45 et roule sur la partie inférieure 45. En particulier, la face de roulement 295 roule sur la face supérieure 95 d'un guide 65 correspondant à l'élément de roulement 40 considéré.

La face de roulement 295 est, par exemple, en forme de portion de cylindre s'étendant selon la deuxième direction Y. Un rayon du cylindre est, par exemple, compris entre 18 mm et 22 mm.

Toutefois, d'autres formes que le cylindre sont susceptibles d'être considérées.

La face d'appui 300 délimite la face de roulement 295 selon la deuxième direction Y.

La face d'appui 300 est, par exemple, plane. En particulier, la face d'appui 300 est perpendiculaire à la deuxième direction Y.

La face d'appui 300 est configurée pour venir en appui contre une face du guide 65 correspondant à l'élément de rotation 40 considéré, notamment contre une face latérale 100, pour empêcher un déplacement de l'élément de rotation 40 par rapport à l'ossature 65 au cours de la rotation du panneau 20.

En particulier, les faces d'appui 30 des deux éléments de rotation 40 d'un même panneau 20 sont orientées à l'opposé l'une de l'autre.

La languette 290 s'étend à partir du corps 285 selon la première direction X.

La languette 290 est interposée selon la direction verticale Z entre l'extrémité inférieure 145 et la première poutre inférieure 60, notamment entre la portion d'extrémité 130 qui délimite la portion principale 125 par le bas et la première poutre inférieure 60.

La languette 290 présente une épaisseur, mesurée selon la direction verticale Z, comprise entre 2 mm et 4 mm.

La languette 290 présente une longueur, mesurée selon la première direction X, comprise entre 25 mm et 40 mm.

L'assemblage de l'armoire 10 va maintenant être décrit.

Lors d'une première étape, l'ossature 15 et le panneau 20 sont fournis. Chaque ferrure 25, 30 correspondant au panneau 20 est, par exemple, fixée à l'ossature 15. Chaque élément de verrouillage 35 est dans la position de déverrouillage correspondante.

Lors d'une deuxième étape, le panneau 20 est inséré dans l'ossature 15. Par exemple, le panneau 20 forme un angle supérieur ou égal à 30 ° avec la direction verticale Z, la portion principale 125 étant inclinée vers la partie inférieure 45 de l'ossature 15 et les portions arrière 140 étant dirigées vers la partie supérieure 50.

En particulier, l'extrémité inférieure 145 est disposée par l'opérateur de telle manière que les surfaces de roulement 295 des éléments de rotation 40 reposent sur les faces supérieures 95 des guides 65. En outre, les faces d'appui 300 sont chacune en regard d'une face latérale 100 du guide 65 correspondant.

Lors d'une troisième étape, l'opérateur relève le panneau 20 pour la mettre dans sa position d'usage, via un mouvement de rotation du panneau 20 autour d'un axe parallèle à la deuxième direction Y.

La rotation entraîne la mise en appui de l'extrémité inférieure 145 contre chaque ferrure inférieure 25. Notamment, l'extrémité inférieure 145 vient reposer sur chaque portion d'appui 170. En outre, la rotation entraîne l'insertion de chaque saillie 165 dans la deuxième ouverture 155 correspondante.

La rotation est effectuée autour d'un axe formé, par exemple, par des points d'appui des éléments de rotation 40 contre les guides 65.

Lors d'une quatrième étape, l'opérateur déplace chaque élément de verrouillage 35 jusqu'à sa position de verrouillage. Ainsi, le panneau 20 est maintenu en position par les ferrures 25, 30 : la saillie 165 empêche un mouvement de l'extrémité inférieure 145 selon la direction X, et l'élément de verrouillage 35 empêche le panneau de pivoter autour de son extrémité inférieure 145 puisque l'extrémité supérieure 150 vient en butée contre l'élément de verrouillage 35 au cours de ce mouvement.

Au cours d'une cinquième étape, l'opérateur fixe chaque ferrure 25, 30 au panneau 20, notamment par vissage.

Grâce à l'invention, un unique opérateur peut mettre en place le panneau 20 dans l'ossature 15 et l'y fixer, puisqu'il n'est pas nécessaire qu'un autre opérateur maintienne le panneau 20 en position pendant la fixation du panneau 20 aux ferrures 25, 30. En outre, ce maintien est obtenu de manière simple et sans mécanisme complexe. La rapidité de montage de l'armoire 10 est donc améliorée, malgré le faible nombre d'opérateurs requis.

Le vissage est une méthode rapide de fixation du panneau 20 aux ferrures 25, 30, permettant notamment au panneau de supporter des charges élevées.

Interposer l'extrémité supérieure 150 du panneau 20 entre l'élément de verrouillage 35 et la deuxième portion arrière 210 permet de maintenir aisément en position cette extrémité supérieure 150. Un élément de verrouillage 35 mobile en translation entre ses deux positions permet d'obtenir un tel maintien aisément et avec une ferrure 30 et un élément de verrouillage 35 de formes simples et rapides à fabriquer.

Les moyens de maintien 270 et leurs moyens complémentaires 250 permettent de faciliter la tâche de l'opérateur.

Une saillie 165 engagée dans une ouverture de l'extrémité inférieure 145 permet de maintenir en position cette extrémité inférieure 145 de manière simple et sans complexifier outre mesure l'armoire 10.

Des ferrures 25, 30 monobloc permettent de simplifier la structure de l'armoire 10.

Les saillies 200 et 235 permettent de faciliter le montage de l'ossature 15 et surtout la fixation des ferrures 25, 30 à l'ossature 15 en permettant leur mise en place aisée par un seul opérateur puisque les saillies empêchent les ferrures 25, 30 de tomber pendant leur vissage à l'ossature 15.

L'élément de rotation 40 permet de faciliter la mise en place du panneau 20 dans sa position d'usage, en facilitant la rotation du panneau par rapport à l'ossature, notamment lorsque l'élément de rotation 40 est en matière plastique, puisque le panneau 20 métallique roule mal sur l'ossature 15 métallique. Les guides 65 facilitent encore cette rotation, en fournissant une surface plus large que les poutres 60 pour permettre le roulement du panneau 20, et les faces 300 facilitent le positionnement du panneau par rapport à l'ossature en venant en appui contre les guides 65.

Il est à noter que les directions X et Y ont été définies par rapport à l'orientation du panneau 20 décrite ci-dessus. D'autres panneaux 20 sont susceptibles d'être présents et fixés à l'ossature 15 par des ferrures 25 et 30 correspondantes, ces panneaux 20 et ferrures 25, 30 étant identiques au panneau 20 et aux ferrures 25 et 30 décrites ci-dessus, mais pivotés par exemple de 90° autour d'un axe vertical pour refléter l'orientation différente de chaque autre panneau 20.

## Revendications

1. Armoire (10), notamment armoire électrique, comportant une ossature (15) et au moins un panneau (20) destiné à être fixé à l'ossature (15) dans une position d'usage, l'ossature (15) comportant une partie supérieure (50) et une partie inférieure (45), le panneau (20) présentant une extrémité inférieure (145) et une extrémité supérieure (150) délimitant le panneau (20) selon une direction verticale (Z) de l'armoire (10) lorsque le panneau (20) est dans la position d'usage, une première direction (X) et une deuxième direction (Y) étant définies, la première et la deuxième direction (X, Y) étant perpendiculaires entre elles et perpendiculaires à la direction verticale (Z), le panneau (20) étant perpendiculaire à la première direction (X) lorsque le panneau (20) est dans la position d'usage, l'armoire (10) comportant en outre au moins une ferrure supérieure (30) et une ferrure inférieure (25), la ferrure supérieure (30) étant fixée à la partie supérieure (50) de l'ossature (15), la ferrure inférieure (25) étant fixée à la partie inférieure (45) de l'ossature (15),
dans laquelle l'extrémité inférieure (145) du panneau (20) dans la position d'usage repose sur la ferrure inférieure (25), la ferrure inférieure (25) étant configurée pour empêcher un déplacement de l'extrémité inférieure (145) selon la première direction (X) par rapport à l'ossature (15), l'armoire (10) comportant au moins un élément de verrouillage (35) porté par la ferrure supérieure (30) et mobile par rapport à la ferrure supérieure (30) entre une position déverrouillée et une position de verrouillage, l'élément de verrouillage (35) étant configuré pour empêcher un déplacement de l'extrémité supérieure (150) selon la première direction (X) par rapport à l'ossature (15) lorsque l'élément de verrouillage (35) est dans la position de verrouillage et le panneau (20) est dans la position d'usage, et pour permettre un déplacement de l'extrémité supérieure (150) selon la première direction (X) par rapport à l'ossature (15) lorsque l'élément de verrouillage (35) est dans la position déverrouillée,
où l'élément de verrouillage comporte des moyens de maintien (270) configurés pour coopérer avec des moyens complémentaires (250) de la ferrure supérieure (30) pour maintenir l'élément de verrouillage (35) dans la position de déverrouillage, les moyens de maintien (270) étant notamment des moyens de maintien par encliquetage, l'armoire (10) étant **caractérisée en ce que** l'élément de verrouillage (35) est mobile en translation par rapport à la ferrure supérieure (30) entre la position de verrouillage et la position déverrouillée.

2. Armoire selon la revendication 1, dans laquelle le panneau (20) est configuré pour être fixé à la ferrure supérieure (30) et à la ferrure inférieure (25), notamment par vissage, lorsque le panneau (20) est dans la position d'usage.

3. Armoire selon la revendication 1 ou 2, dans laquelle la ferrure supérieure comporte une portion arrière (175) contre laquelle le panneau (20) est en appui lorsque le panneau (20) est dans la position d'usage, l'extrémité supérieure (150) étant interposée selon la première direction (X) entre la portion arrière (175) et l'élément de verrouillage (35) lorsque le panneau (20) est dans la position d'usage et l'élément de verrouillage (35) est dans la position de verrouillage.

4. Armoire selon l'une quelconque des revendications 1 à 3, dans laquelle au moins une ferrure (25, 30) comporte une première saillie (200, 235) engagée dans une première ouverture (90) correspondante de l'ossature (15), la première saillie (200, 235) étant configurée pour empêcher une translation de la ferrure (25, 30) selon la direction verticale (Z) lorsque la première saillie (200, 235) est engagée dans la première ouverture (90).

5. Armoire selon l'une quelconque des revendications 1 à 4, dans laquelle chaque ferrure supérieure (30) ou inférieure (25) est monobloc.

6. Armoire selon selon la revendication 4 ou
la revendication 5 lorsqu'elle dépend de la revendication 4, dans laquelle la ferrure inférieure (25) comporte une deuxième saillie (165), la deuxième saillie (165) étant engagée dans une deuxième ouverture (155) du panneau (20) pour empêcher un déplacement de l'extrémité inférieure (145) selon la première direction (X) par rapport à l'ossature (15) lorsque le panneau (20) est dans la position d'usage.

7. Armoire selon l'une quelconque des revendications 1 à 6, comportant en outre un élément de rotation (40) interposé entre la partie inférieure (45) de l'ossature (15) et l'extrémité inférieure (145), l'élément de rotation (40) étant solidaire de l'extrémité inférieure (145) et comportant une face de roulement (295) configurée pour rouler sur une face (95) de la partie inférieure (45) lorsque le panneau (20) pivote autour d'un axe parallèle à la deuxième direction (Y) vers la position d'usage.

8. Armoire selon la revendication 7, dans laquelle la partie inférieure (45) de l'ossature (15) comporte un guide (65) s'étendant selon la première direction (X), le guide (65) étant configuré pour que l'élément de rotation (40) roule sur le guide (65) pendant le pivotement du panneau (20).

9. Armoire selon la revendication 8, dans laquelle l'élément de rotation (40) comporte, en outre, une face d'appui (300) configurée pour venir en appui contre une face (100) du guide (65) pour empêcher un déplacement de l'élément de rotation (40) selon la deuxième direction (Y) lors du pivotement.

## Patentansprüche

1. Schrank (10), insbesondere Schaltschrank, umfassend einen Rahmen (15) und mindestens eine Platte (20), die dazu bestimmt ist, in einer Gebrauchsstellung an dem Rahmen (15) befestigt zu sein, der Rahmen (15) umfassend einen oberen Abschnitt (50) und einen unteren Abschnitt (45), wobei die Platte (20) ein unteres Ende (145) und ein oberes Ende (150) aufweist, die die Platte (20) entlang einer vertikalen Richtung (Z) des Schranks (10) begrenzen, wenn die Platte (20) in der Gebrauchsstellung ist, eine erste Richtung (X) und eine zweite Richtung (Y) definiert sind, wobei die erste und die zweite Richtung (X, Y) senkrecht zueinander und senkrecht zu der vertikalen Richtung (Z) sind, wobei die Platte (20) senkrecht zu der ersten Richtung (X) ist, wenn sich die Platte (20) in der Gebrauchsstellung ist, wobei der Schrank (10) ferner mindestens einen oberen Beschlag (30) und einen unteren Beschlag (25) umfasst, der obere Beschlag (30) an der Oberseite (50) des Rahmens (15) befestigt ist, wobei der untere Beschlag (25) an dem unteren Abschnitt (45) des Rahmens (15) befestigt ist,
wobei das untere Ende (145) der Platte (20) in der Gebrauchsstellung auf dem unteren Beschlag (25) aufliegt, wobei der untere Beschlag (25) konfiguriert ist, um eine Bewegung des unteren Endes (145) in der ersten Richtung (X) in Bezug auf den Rahmen (15) zu verhindern, der Schrank (10) mindestens ein Verriegelungselement (35) umfasst, das von dem oberen Beschlag (30) getragen wird und in Bezug auf den oberen Beschlag (30) zwischen einer entriegelten Position und einer Verriegelungsposition bewegbar ist, wobei das Verriegelungselement (35) konfiguriert ist, um eine Bewegung des oberen Endes (150) in der ersten Richtung (X) in Bezug auf den Rahmen (15) zu verhindern, wenn das Verriegelungselement (35) in der Verriegelungsposition und die Platte (20) in der Gebrauchsstellung ist, und um eine Bewegung des oberen Endes (150) in der ersten Richtung (X) in Bezug auf den Rahmen (15) zu ermöglichen, wenn das Verriegelungselement (35) in der entriegelten Position ist,
wobei
das Verriegelungselement Halteeinrichtungen (270) umfasst, die konfiguriert sind, um mit komplementären Einrichtungen (250) des oberen Beschlags (30) zusammenzuwirken, um das Verriegelungselement (35) in der Entriegelungsposition zu halten, wobei die Halteeinrichtungen (270) insbesondere Einrichtungen zum Halten durch Einrasten sind, wobei der Schrank (10) **dadurch gekennzeichnet ist, dass** das Verriegelungselement (35) in Bezug auf den oberen Beschlag (30) zwischen der Verriegelungsposition und der entriegelten Position translatorisch bewegbar ist.

2. Schrank nach Anspruch 1, wobei die Platte (20) konfiguriert ist, um an dem oberen Beschlag (30) und an dem unteren Beschlag (25) befestigt zu werden, insbesondere durch Verschrauben, wenn die Platte (20) in der Gebrauchsstellung ist.

3. Schrank nach Anspruch 1 oder 2, wobei der obere Beschlag einen hinteren Abschnitt (175) umfasst, an dem die Platte (20) anliegt, wenn die Platte (20) in der Gebrauchsstellung ist, das obere Ende (150) in der ersten Richtung (X) zwischen dem hinteren Abschnitt (175) und dem Verriegelungselement (35) angeordnet ist, wenn die Platte (20) in der Gebrauchsstellung und das Verriegelungselement (35) in der Verriegelungsstellung ist.

4. Schrank nach einem der Ansprüche 1 bis 3, wobei mindestens ein Beschlag (25, 30) einen ersten Vorsprung (200, 235) umfasst, der in eine entsprechende erste Öffnung (90) des Rahmens (15) eingreift, der erste Vorsprung (200, 235) konfiguriert ist, um eine Translation des Beschlags (25, 30) in der vertikalen Richtung (Z) zu verhindern, wenn der erste Vorsprung (200, 235) in die erste Öffnung (90) eingreift.

5. Schrank nach einem der Ansprüche 1 bis 4, wobei jeder obere (30) oder untere (25) Beschlag einteilig ist.

6. Schrank nach Anspruch 4 oder Anspruch 5, wenn abhängig von Anspruch 4, wobei
der untere Beschlag (25) einen zweiten Vorsprung (165) umfasst, wobei der zweite Vorsprung (165) in eine zweite Öffnung (155) der Platte (20) eingreift, um eine Bewegung des unteren Endes (145) in der ersten Richtung (X) in Bezug auf den Rahmen (15) zu verhindern, wenn die Platte (20) in der Gebrauchsstellung ist.

7. Schrank nach einem der Ansprüche 1 bis 6, ferner umfassend Drehelement (40) aufweist, das zwischen den unteren Abschnitt (45) des Rahmens (15) und das untere Ende (145) eingefügt ist, wobei das Drehelement (40) fest mit dem unteren Ende (145) verbunden ist und eine Rollfläche (295) umfasst, die konfiguriert ist, um auf einer Fläche (95) des unteren Abschnitts (45) zu rollen, wenn die Platte (20) um eine Achse parallel zu der zweiten Richtung (Y) in die Gebrauchsstellung geschwenkt wird.

8. Schrank nach Anspruch 7, wobei der untere Abschnitt (45) des Rahmens (15) eine Führung (65) umfasst, die sich in der ersten Richtung (X) erstreckt, wobei die Führung (65) konfiguriert ist, damit das Drehelement (40) während des Schwenkens der Platte (20) auf der Führung (65) rollt.

9. Schrank nach Anspruch 8, wobei das Drehelement (40) ferner eine Auflagefläche (300) aufweist, die konfiguriert ist, um an einer Fläche (100) der Führung (65) anzuliegen, um eine Verschiebung des Drehelements (40) in der zweiten Richtung (Y) beim Schwenken zu verhindern.

## Claims

1. A cabinet (10), in particular an electrical cabinet, comprising a framework (15) and at least one panel (20) designed to be fixed to the framework (15) in a position of use, the framework (15) comprising an upper section (50) and a lower section (45), **characterised in that** the panel (20) having a lower end (145) and an upper end (150) delimiting the panel (20) in a vertical direction (Z) of the cabinet (10) when the panel (20) is in the position of use, a first direction (X) and a second direction (Y) being defined, **characterised in that** the first and second directions (X, Y) being perpendicular to each other and perpendicular to the vertical direction (Z), the panel (20) being perpendicular to the first direction (X) when the panel (20) is in the position of use, the cabinet (10) further comprising at least an upper fitting (30) and a lower fitting (25), the upper fitting (30) being fixed to the upper section (50) of the framework (15), the lower fitting (25) being fixed to the lower section (45) of the framework (15),
in which the lower end (145) of the panel (20), in the use position, rests on the lower fitting (25), the lower fitting (25) being configured to prevent displacement of the lower end (145) in the first direction (X) relative to the framework (15), the cabinet (10) comprising at least one locking element (35) carried by the upper fitting (30) and movable relative to the upper fitting (30) between an unlocked position and a locked position, the locking element (35) being configured to prevent displacement of the upper end (150) in the first direction (X) relative to the framework (15) when the locking element (35) is in the locked position and the panel (20) is in the use position, and to allow displacement of the upper end (150) in the first direction (X) relative to the framework (15) when the locking element (35) is in the unlocked position, wherein
the locking element comprises holding means (270) configured to cooperate with complementary means (250) of the upper fitting (30) to hold the locking element (35) in the unlocked position, the holding means (270) being in particular snap-fit holding means,
the cabinet (10) being **characterised in that** the locking element (35) is translationally movable relative to the upper fitting (30) between the locked position and the unlocked position.

2. A cabinet as claimed in claim 1, in which the panel (20) is configured to be fixed to the top fitting (30) and to the bottom fitting (25), in particular by screwing, when the panel (20) is in the position of use.

3. A cabinet according to claim 1 or 2, in which the upper fitting comprises a rear portion (175) against which the panel (20) bears when the panel (20) is in the position of use, the upper end (150) being interposed along the first direction (X) between the rear portion (175) and the locking element (35) when the panel (20) is in the position of use and the locking element (35) is in the locking position.

4. A cabinet according to any one of claims 1 to 3, in which at least one fitting (25, 30) comprises a first projection (200, 235) engaged in a corresponding first opening (90) in the framework (15), the first projection (200, 235) being configured to prevent translation of the fitting (25, 30) in the vertical direction (Z) when the first projection (200, 235) is engaged in the first opening (90).

5. A cabinet according to any one of claims 1 to 4, in which each upper (30) or lower (25) fitting is made in one piece.

6. A cabinet according to claim 4 or claim 5 when dependent on claim 4,
wherein
the lower fitting (25) comprises a second projection (165), the second projection (165) being engaged in a second opening (155) in the panel (20) to prevent movement of the lower end (145) in the first direction (X) relative to the framework (15) when the panel (20) is in the position of use.

7. A cabinet according to any one of claims 1 to 6, further comprising a rotating element (40) positioned between the lower section (45) of the framework (15) and the lower end (145), the rotating element (40) being fixed to the lower end (145) and comprising a rolling surface (295) configured to roll on a surface (95) of the lower section (45) when the panel (20) pivots about an axis parallel to the second direction (Y) towards the usage position.

8. A cabinet according to claim 7, wherein the lower section (45) of the framework (15) comprises a guide (65) extending in the first direction (X), the guide (65) being configured so that the rotating element (40) rolls on the guide (65) during pivoting of the panel (20).

9. A cabinet as claimed in claim 8, in which the rotating element (40) further includes a bearing face (300) configured to bear against a face (100) of the guide (65) to prevent displacement of the rotating element (40) in the second direction (Y) during pivoting.
